# EUROPEAN PATENT SPECIFICATION

(11) **EP 3 023 213 B1**
(45) Date of publication and mention of the grant of the patent: **12.06.2019**
(21) Application number: 14829785.6
(22) Date of filing: 07.04.2014
(51) Int. Cl.: B29C 33/02, B29C 35/02, B29D 30/00, B29D 30/06, B29D 30/66

(54) **MOLD FOR SPIKED TIRE**
FORM FÜR EINEN SPIKEPROFILREIFEN
MOULE POUR PNEU CLOUTÉ

(30) Priority: 23.07.2013 JP 2013152234
(43) Date of publication of application: 25.05.2016
(73) Proprietor: Sumitomo Rubber Industries, Ltd., Kobe-shi, Hyogo 651-0072 (JP)
(72) Inventor: TAKAHASHI Shingo, Hyogo 651-0072 (JP)
(74) Representative: Manitz Finsterwald Patent- und Rechtsanwaltspartnerschaft mbB
(86) International application number: PCT/JP2014/060110
(87) International publication number: WO 2015/011959

(56) References cited:
- DE-A1-102009 044 845
- GB-A- 952 312
- JP-A- S62 275 807
- JP-A- 2001 038 736
- JP-A- 2007 290 149
- JP-A- 2010 105 360
- JP-A- 2012 045 845
- JP-A- 2012 096 471
- KR-A- 20120 063 102
- US-A- 3 842 880
- US-A1- 2004 079 471

## Description

### TECHNICAL FIELD

The present invention relates to molds for use in a vulcanization molding step for a spike tire, and mold pins mounted to molds.

### BACKGROUND ART

In a vulcanization molding step for a tire, a vulcanizer including a mold is used. As the mold, a two phase mold and a two piece mold can be used. In general, the two phase mold includes a plurality of segments and a pair of upper and lower side plates. A shape of each segment in a plan view is substantially a circular arc shape. By connecting the plurality of segments to each other in a ring shape, a ring-shaped cavity surface can be formed.

In a spike tire, many spike pins for maintaining on-ice performance are provided on a tread surface of the tire so as to project therefrom. In a mold for the spike tire, a plurality of pins are provided on a cavity surface of the mold so as to project therefrom. By the pins, spike pin holes for mounting the spike pins are formed in the tread surface of the tire. Here, the pins provided on the mold so as to project therefrom are referred to as mold pins.

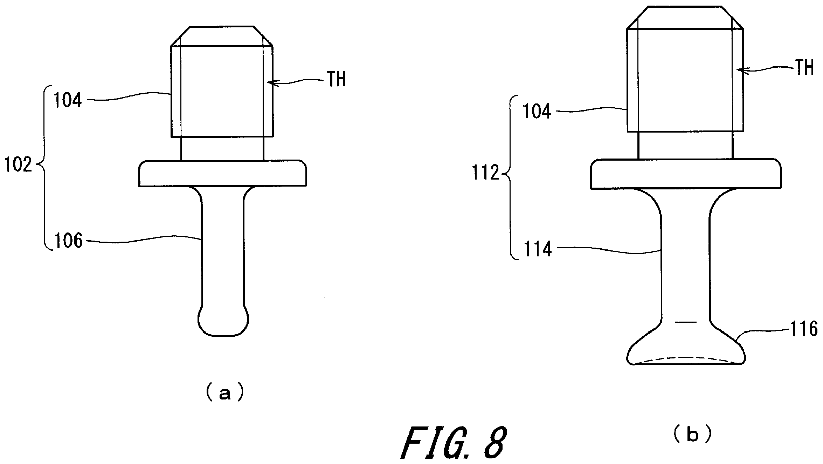

FIG. 8(a) shows an example of the mold pin. The mold pin 102 includes: a mounted portion 104 to be mounted to a mold; and a hole formation portion 106 to be buried in a tire to form a spike pin hole. In the tire, a spike pin hole having a shape substantially similar to and smaller than that of the hole formation portion 106 is formed. The mounted portion 104 and the hole formation portion 106 are coaxial with each other. In the mounted portion 104, a male thread TH is formed which can be screwed into a threaded hole of a mold (not shown).

FIG. 8(b) shows another example of the mold pin. The mold pin 112 has a flange portion (expanded portion) 116 formed at a tip end of a hole formation portion 114 thereof. The structures of the other portions are the same as the above-described mold pin 102, thus the other portions are designated by the same reference characters, and the description thereof is omitted. With the mold pin 112, a spike pin hole having a shape substantially complementary to that of the hole formation portion 114 is formed in a tire. That is, a spike pin hole having a diameter-enlarged portion at a bottom thereof is formed. A spike pin which has a flange portion at a base end thereof and is not shown is mounted into the spike pin hole. The flange portion of the spike pin engages the diameter-enlarged portion of the spike pin hole. The spike pin is unlikely to fall off from the spike pin hole.

In opening the mold to remove a tire from the mold after vulcanization of the tire, the tip end of a mold pin is likely to be caught by the opening edge of a spike pin hole of the tire. Thus, a crack may occur from the opening edge. A tread pattern surface may be damaged. A factor for the above catching is that the central axis direction (also referred to as longitudinal direction) of the mold pin buried in the tire does not coincide with a direction in which the segments of the mold move to be opened. The longitudinal directions of the mold pins which are provided near both ends of each segment in the circumferential direction of the cavity surface so as to project, are tilted at angles relative to the moving direction of the segment. That is, each mold pin is not pulled out in the longitudinal direction of the mold pin (which is the longitudinal direction of the hole), but is moved parallel in a direction tilted from the longitudinal direction. As a result, the mold pin moves in such a manner that the mold pin widens the spike pin hole.

Regarding a mold pin of which such catching by the opening edge of the spike pin hole is suppressed, a technique proposed in JP2012-45845 is known.

By changing the physical properties of a rubber of a cap layer of a tread to cause the rubber to have a low hardness, it is also possible to suppress catching of the mold pin by the opening edge of the spike pin hole. However, when the rubber of the cap layer is flexible, the mounted spike pin is easily movable, and pin falling-off prevention performance may decrease.
In KR 2012-0063102 A a mold pin is disclosed which has a mounted portion and a pin hole formation portion. The pin hole formation portion is partially retractable into the mounted portion.
JP 2012-45845 A discloses a mold pin having a mounted portion and a pin hole formation portion, wherein the pin hole formation portion is connected to the mounted portion via a coil-spring.

### CITATION LIST

### PATENT LITERATURE

Patent Literature 1: JP2012-45845.

### SUMMARY OF THE INVENTION

### PROBLEMS TO BE SOLVED BY THE INVENTION

The present invention has been made in in view of the aforementioned situation. An object of the present invention is to provide a mold pin which allows a pin hole having improved pin falling-off prevention performance for a spike pin to be formed in a spike tire, which makes it easy to remove the tire from a mold after vulcanization molding of the tire, and which can suppress occurrence of a scar at the opening periphery of the spike pin hole. Another object of the present invention is to provide a tire molding mold including the mold pin.

### SOLUTION TO THE PROBLEMS

A mold pin according to the present invention is a mold pin for forming a spike pin mounting hole in a tread surface of a tire. The mold pin includes a mounted portion which is a portion to be inserted into a mold and fixed; and a pin hole formation portion which is a portion to be buried in the tire to form a spike pin hole. The pin hole formation portion includes an expanded portion formed at or near a tip end thereof, and the expanded portion is configured to be displaceable relative to the mounted portion in a central axis direction of the pin hole formation portion.

Preferably, the expanded portion is configured to be rotatable relative to the mounted portion about a central axis of the expanded portion.

Preferably, the mounted portion includes: a guide space formed so as to be coaxial with the pin hole formation portion; and an engaging portion formed within the guide space, the pin hole formation portion includes a to-be-engaged portion formed at a base end thereof, displacement of the pin hole formation portion in the central axis direction is guided by the guide space, and separation of the pin hole formation portion from the guide space is prevented by the to-be-engaged portion being engaged with the engaging portion.

Preferably, the pin hole formation portion includes: a base portion fixed to the mounted portion; and an extensible portion displaceable in a central axis direction of the base portion, the expanded portion is formed at or near a tip end of the extensible portion, the base portion includes a coaxial guide space and an engaging portion formed within the guide space, the extensible portion includes a to-be-engaged portion formed at a base end thereof, displacement of the extensible portion in the central axis direction of the base portion is guided by the guide space, and separation of the extensible portion from the guide space is prevented by the to-be-engaged portion being engaged with the engaging portion.

Preferably, at least the expanded portion, of the pin hole formation portion and the expanded portion, is configured to be swingable relative to the mounted portion.

Preferably, the mold pin is configured such that the swing is enabled when the displacement of the expanded portion reaches a maximum.

Preferably, a ratio D2/D1 of a length D2 in the central axis direction of the pin hole formation portion when the displacement in the central axis direction of the expanded portion is the maximum, relative to a length D1 in the central axis direction of the pin hole formation portion when the expanded portion is not displaced in the central axis direction, is selected from a range of not less than 1.2 and not greater than 1.8.

Preferably, the pin hole formation portion has a columnar outer shape, the expanded portion has a disc-like outer shape, and a ratio A/B of a diameter A of the expanded portion relative to a diameter B of the pin hole formation portion is not less than 1.2 and not greater than 3.5.

A tire mold according to the present invention includes: a plurality of segments disposed in a ring shape and each having a molding cavity surface having a circular arc shape in a plan view; and a pair of upper and lower side plates disposed radially inward of each segment and each having a molding cavity surface. A plurality of mold pins are provided on the cavity surface of each of the segments so as to project therefrom, a direction in which each of the mold pins projects is directed toward a center of the circular arc of the cavity surface, and each of the mold pins is formed of any of the aforementioned mold pins.

Preferably, at least the mold pins, of the cavity surface and the mold pins, are subjected to a surface treatment for friction reduction.

### ADVANTAGEOUS EFFECTS OF THE INVENTION

According to the present invention, it is possible to form, in a spike tire, a spike pin hole having improved pin falling-off prevention performance for a spike pin, and it is made easy to remove the tire from a mold after vulcanization molding of the tire, and occurrence of a scar at the opening periphery of the spike pin hole can be suppressed.

### BRIEF DESCRIPTION OF THE DRAWINGS

FIG. 1 is a plan view showing a tire mold according to an embodiment of the present invention.
FIG. 2 is a cross-sectional view taken along a II-II line in FIG. 1.
FIG. 3(a) is a longitudinal cross-sectional view showing an extended state of a mold pin according to an embodiment of the present invention, which can be used for the mold in FIG. 1, where the mold pin is buried in an unvulcanized raw cover, and FIG. 3(b) is a longitudinal cross-sectional view showing a state of the mold pin where the mold pin is shortened by a hard tire rubber that has been vulcanized.
FIG. 4(a) is a longitudinal cross-sectional view showing a state of a mold pin according to another embodiment where the mold pin is shortened by a hard tire rubber that has been vulcanized, and FIG. 4(b) is a longitudinal cross-sectional view showing a state of the mold pin where the mold pin is extended when a mold is opened.
FIG. 5(a) is a longitudinal cross-sectional view showing a free state of a mold pin according to still another embodiment where the mold pin is not held by a rubber, FIG. 5(b) is a longitudinal cross-sectional view showing a state of the mold pin where the mold pin is shortened by a hard tire rubber that has been vulcanized, and FIG. 5(c) is a partially sectional front view showing a state of the mold pin where the mold pin is extended when a mold is opened.
FIG. 6(a) is a front view showing a mold pin according to still another embodiment, FIG. 6(b) is a perspective view prior to assembly, showing a mounted portion etc. of the mold pin, and FIG. 6(c) is a perspective view prior to assembly, showing a pin hole formation portion etc. of the mold pin.
FIG. 7 is a front view showing an example of a spike pin mounted in a spike pin hole which can be formed by the mold pin in FIG. 4.
FIG. 8(a) is a front view showing an example of a conventional mold pin, and FIG. 8(b) is a front view showing another example of a conventional mold pin.

### DESCRIPTION OF EMBODIMENTS

The following will describe in detail the present invention based on preferred embodiments with appropriate reference to the drawings.

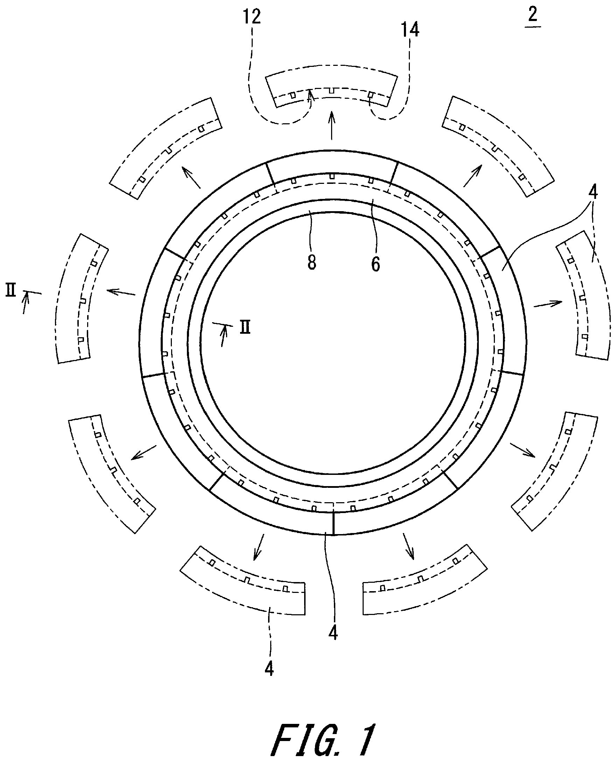

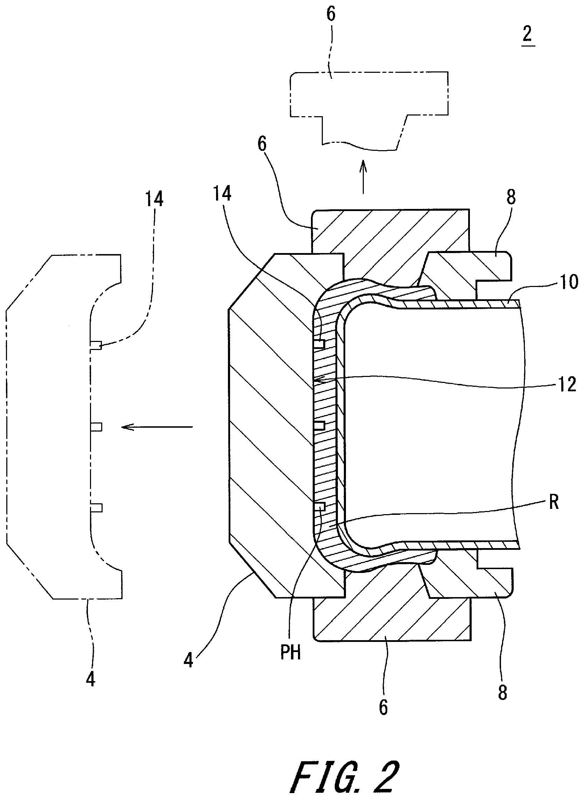

FIG. 1 is a plan view showing a tire mold (hereinafter, referred to merely as mold) 2 according to one embodiment of the present invention. The mold 2 is provided in a vulcanizer for a tire. FIG. 2 is an enlarged cross-sectional view taken along a II-II line in FIG. 1. In FIG. 2, the up-down direction is the axial direction of a tire, and the right-left direction is the radial direction of the tire. A direction perpendicular to the surface of the sheet is the circumferential direction of the tire. The mold 2 includes a plurality of segments 4, a pair of upper and lower side plates 6, and a pair of upper and lower bead rings 8. FIG. 2 also shows a raw cover R and a bladder 10 which will be described later.

As shown in FIG. 1, the side plates 6 are disposed radially inward of the segments 4. A planar shape of each segment 4 is substantially a circular arc shape. The plurality of segments 4 are connected to each other in a ring shape. The number of the segments 4 is generally not less than 3 and not greater than 20. FIG. 1 illustrates the mold 2 including 9 segments 4. The inner peripheral surface of each segment 4 constitutes a cavity surface 12. The side plates 6 and the bead rings 8 each have substantially a ring shape. The mold 2 is a so-called "two phase mold".

As shown in FIG. 2, a plurality of mold pins 14 are provided on the cavity surface 12 of each segment 4 so as to project therefrom. Each mold pin 14 serves to form a spike pin hole PH in a tread surface of a tire to be molded. The direction in which each mold pin 14 projects is a radially inward direction of the mold (of the tire) in a plan view. As shown in FIG. 1, in a plan view, the mold pins 14 are provided so as to project toward the center of the mold. As shown in FIG. 2, in a front view, the mold pins 14 are parallel to the equator plane of the tire. An arrangement of the plurality of mold pins 14 is set in accordance with a tread pattern of the tire.

In a manufacturing process for a spike tire in which the mold 2 is used, the raw cover R is obtained by preforming. The raw cover R is put into the interior (cavity) of the mold 2 in a state where the mold 2 is opened and the bladder 10 is contracted. At this stage, a rubber composition of the raw cover R is in an uncrosslinked state.

The mold 2 is closed. That is, the pair of upper and lower side plates 6 come close to each other to close, and the plurality of segments 4 come close to each other to close. The raw cover R is received in the cavity surrounded by the inner surface (the cavity surface 12) of the mold 2 and the bladder 10. The bladder 10 expands by filling with gas. The raw cover R is pressed against the cavity surface 12 of the mold 2 by the bladder 10, to be pressurized. At the same time, the raw cover R is heated.

Due to the pressurization and the heating, the rubber composition flows. The rubber sinks into the cavity surface 12 while flowing. Accordingly, an outer surface of the tire is formed. At the same time, a portion of each mold pin 14 that projects in the cavity is buried within the rubber. A groove on the above-described tread surface is included in the outer surface of the tire. In the case where a decoration such as a character, a symbol, or the like is provided on a sidewall, the decoration is also included in the outer surface. A spike pin hole PH is formed in the tread surface of the tire as a result of the buried mold pin 14 being pulled out.

By continuing the heating, a crosslinking reaction of the rubber takes place to obtain the tire. The step in which the raw cover R is pressurized and heated is referred to as a vulcanization step. Of the cavity surface 12, a tread portion of the tire is formed in the range of the segments 4, side portions of the tire are formed in the ranges of the side plates 6, and bead portions are formed in the ranges of the bead rings 8.

When the vulcanization step has ended, the mold 2 is opened, and the tire is taken out from the cavity. In FIGS. 1 and 2, alternate long and two short dashes lines indicate movement of the segments 4 when the mold 2 is opened. As shown in FIG. 1, each segment 4 simultaneously moves radially outward in a plan view. In addition, each segment 4 may move axially in a direction away from the equator plane in a front view while moving radially.

Regarding each of the mold pins 14 located so as to be spaced apart from the center of each segment 4 in the circumferential direction of the cavity surface 12, the moving direction of the segment 4 does not coincide with the central axis direction of the mold pin 14. The moving direction of the segment 4 is tilted at a predetermined angle relative to the central axis direction of the mold pin 14. The above-described mold pins 14 each have a structure in which the mold pin 14 is unlikely to be caught by the spike pin hole PH of the tire even if the segment 4 is moved in the direction as described above when the mold 2 is opened.

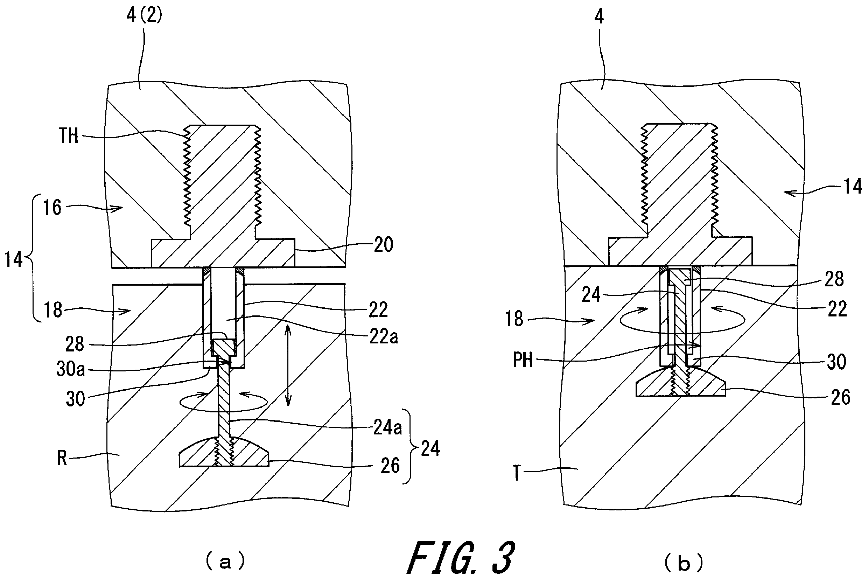

FIG. 3 shows the mold pin 14. The mold pin 14 includes: a mounted portion 16 which is a portion to be inserted into the mold 2 and fixed; and a pin hole formation portion 18 which is a portion to be buried in a tire T to form a spike pin hole PH. The mounted portion 16 and the pin hole formation portion 18 each basically have a cylindrical outer shape. The mounted portion 16 and the pin hole formation portion 18 are coaxially joined in series to each other.

A male thread TH for fixing the mounted portion 16 to the segment 4 of the mold is formed in the mounted portion 16. A disc portion 20 is formed at a lower end portion of the male thread TH, that is, an end portion of the mounted portion 16 at the pin hole formation portion 18 side. By the disc portion 20, the mold pin 14 is positioned when being screwed into the segment 4. The disc portion 20 may project from the cavity surface 12 of the mold to be buried within the rubber of the tire T.

The pin hole formation portion 18 includes: a base portion 22 which is joined to the mounted portion 16 by means of resistance welding or the like; and an extensible portion 24 which is connected to the base portion 22 so as to be able to advance and retract in the central axis direction. The base portion 22 has a cylindrical shape, and the extensible portion 24 has a columnar shape. The base portion 22 and the extensible portion 24 are coaxially disposed. The extensible portion 24 is inserted in an internal space 22a of the base portion 22 with a base end (upper end) thereof being placed therein. Due to the internal space 22a, the base portion 22 and the extensible portion 24 are telescopically connected to each other. The internal space 22a is a guide space for the extensible portion 24.

The extensible portion 24 includes an expanded portion (flange portion) 26 formed at a tip end (lower end) thereof. The expanded portion 26 serves to form, at the bottom of the spike pin hole PH, an effective diameter-enlarged portion for engagement with a spike pin. The expanded portion 26 has a substantially disc shape.

A disc-shaped to-be-engaged portion 28 having an enlarged diameter is formed at a base end of the extensible portion 24. An engaging portion 30 is formed at a tip end of the base portion 22. The engaging portion 30 has a ring shape. The engaging portion 30 has a through hole 30a having an inner diameter which is slightly larger than the outer diameter of a main body 24a of the extensible portion 24 and smaller than the outer diameter of the to-be-engaged portion 28. The main body 24a of the extensible portion 24 can pass through the engaging portion 30 but the to-be-engaged portion 28 is brought into engagement with the engaging portion 30.

When the extensible portion 24 is pulled out from the base portion 22, the to-be-engaged portion 28 comes into engagement with the engaging portion 30 to stop (FIG. 3(a)). At the time of vulcanization molding of the tire T, in a state where the raw cover R is unvulcanized and flexible, the mold pin 14 can enter such an extended state within the rubber. When the extensible portion 24 is pressed into the base portion 22, the upper surface of the expanded portion 26 comes into contact with the lower end of the base portion 22 to stop (FIG. 3(b)). At the time of vulcanization molding of the tire T, in a state where the tire T is hard after end of vulcanization, the mold pin 14 can enter such a shortened state.

Since the extensible portion 24 is configured to be able to advance and retract relative to the base portion 22 as described above, the expanded portion 26 is configured to be able to advance and retract relative to the mounted portion 16 in the central axis direction thereof. In addition, it is also obvious that the extensible portion 24 is rotatable about the central axis thereof relative to the base portion 22. In this manner, the pin hole formation portion 18 including the expanded portion 26 is able to advance and retract relative to the mounted portion 16 and is rotatable relative to the mounted portion 16. Due to such a motion, the friction between the spike pin hole PH and the pin hole formation portion 18 is reduced when the tire T is removed from the mold. As a result, catching of the pin hole formation portion 18 by the spike pin hole PH is greatly reduced. Thus, occurrence of a scar at the opening periphery of the spike pin hole PH can be suppressed.

The expanded portion 26 is fixed to the tip end of the main body 24a of the extensible portion 24 by means of a screw. This is from the standpoint that assembly of the mold pin 14 is made easy. However, the method for forming the expanded portion 26 is not limited to such a method. The expanded portion 26 and the main body 24a of the extensible portion 24 may be formed so as to be integrated with each other.

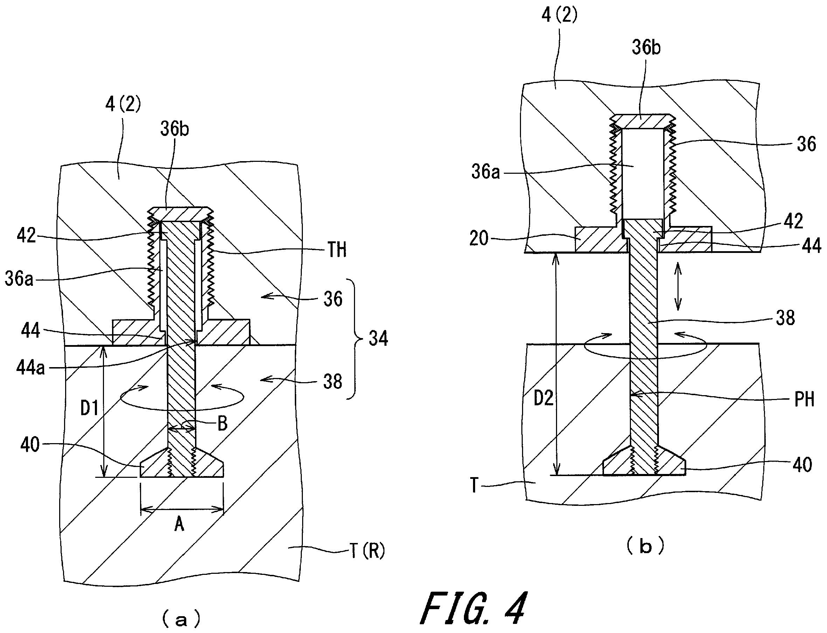

FIG. 4 shows another mold pin 34. The mold pin 34 includes a mounted portion 36 and a pin hole formation portion 38 which are coaxially and telescopically connected to each other. In the mounted portion 36, a male thread TH for fixing the mounted portion 36 to the segment 4 of the mold is formed. The pin hole formation portion 38 includes an expanded portion (flange portion) 40 formed at a tip end thereof. The mounted portion 36 has a cylindrical shape, and the pin hole formation portion 38 basically has a columnar shape. In order to make assembly of the mold pin 34 easy, a disc-shaped cap 36b is fixed to an upper end of the cylindrical mounted portion 36 by means of welding. However, the method for forming the mounted portion 36 is not limited to such a method. The expanded portion 40 has a substantially disc shape. The mold pin 34 is also configured such that the pin hole formation portion 38 is able to advance and retract relative to the mounted portion 36 and is rotatable relative to the mounted portion 36.

The pin hole formation portion 38 is inserted in an internal space 36a of the mounted portion 36 with a base end thereof being placed therein. Due to the internal space 36a, the mounted portion 36 and the pin hole formation portion 38 are telescopically connected to each other. The internal space 36a is a guide space for the pin hole formation portion 38. A disc-shaped to-be-engaged portion 42 having an enlarged diameter is formed at the base end of the pin hole formation portion 38. A ring-shaped engaging portion 44 is formed at a tip end of the mounted portion 36. The engaging portion 44 has a through hole 44a having an inner diameter which is slightly larger than the outer diameter B of the pin hole formation portion 38 and slightly smaller than the outer diameter of the to-be-engaged portion 42. The to-be-engaged portion 42 of the pin hole formation portion 38 is brought into engagement with the engaging portion 44.

When the pin hole formation portion 38 is pressed into the mounted portion 36, the to-be-engaged portion 42 comes into contact with an upper end within the mounted portion 36 to stop (FIG. 4(a)). At the time of vulcanization of the tire T, as a result of the rubber being cured, the pin hole formation portion 38 is pressed into the mounted portion 36 as shown. When the pin hole formation portion 38 is pulled out from the mounted portion 36, the to-be-engaged portion 42 comes into engagement with the engaging portion 44 to stop (FIG. 4(b)). In this manner, the pin hole formation portion 38 is configured to be able to advance and retract relative to the mounted portion 36. The expanded portion 40 is configured to be displaceable relative to the mounted portion 36 in the central axis direction. It is also obvious that the pin hole formation portion 38 is rotatable about the central axis thereof relative to the mounted portion 36.

After end of vulcanization of the tire T, when the segment 4 is opened, the pin hole formation portion 38 enters such an advanced state as shown in FIG. 4(b). Due to this motion, catching of the pin hole formation portion 38 by the spike pin hole PH is greatly reduced when the tire T is removed from the mold. This is because the friction between the spike pin hole PH and the pin hole formation portion 38 is reduced due to extension and rotation of the pin hole formation portion 38. Thus, occurrence of a scar at the opening periphery of the spike pin hole PH can be suppressed.

It is easy to change the mold pin 34 such that the pin hole formation portion 38 is able to advance and retract but not rotatable. A guide groove which is not shown is formed on the inner peripheral surface of the mounted portion 36 so as to extend in the central axis direction. A to-be-guided projection portion which is engaged with the guide groove is formed on the outer peripheral surface of the to-be-engaged portion 42 of the pin hole formation portion 38. Due to such a configuration, the pin hole formation portion 38 can be configured to be able to advance and retract relative to the mounted portion 36 and be non-rotatable relative to the mounted portion 36. This configuration is also applicable to the aforementioned mold pin 14 in FIG. 3.

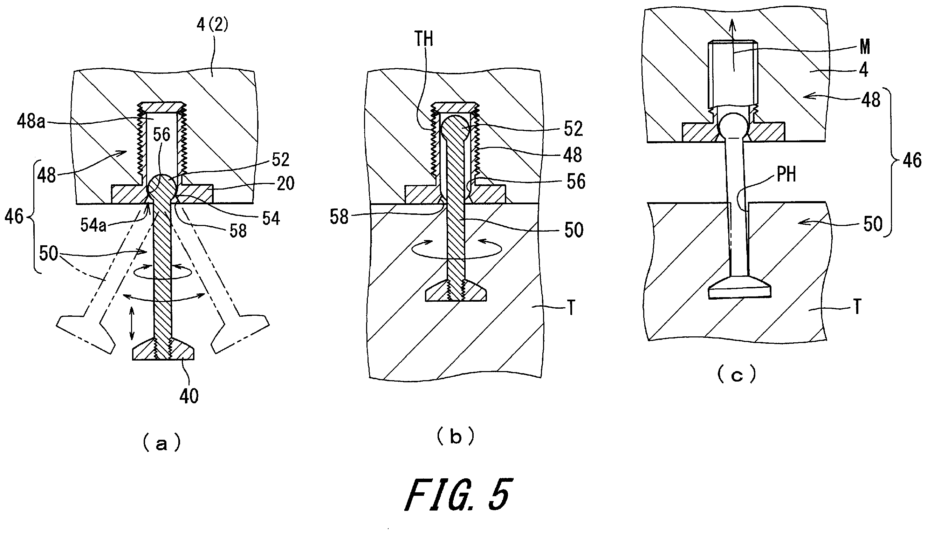

FIG. 5 shows another mold pin 46. The entire configuration of the mold pin 46 is similar to that of the mold pin 34 shown in FIG. 4. The difference between the mold pin 46 and the mold pin 34 in FIG. 4 is the shape of a to-be-engaged portion 52 at a base end of a pin hole formation portion 50 and the shape of an engaging portion 54 at a tip end of a mounted portion 48. The other members are substantially the same as the members of the mold pin 34 in FIG. 4, and thus are designated by the same reference characters, and the description thereof is omitted. Due to such a configuration, in the mold pin 46, the pin hole formation portion 50 is extendable and rotatable about the central axis thereof relative to the mounted portion 48, and also is swingable as described later. In this configuration, it can be said that the expanded portion 40 is rotatable and swingable relative to the mounted portion 48.

In the mold pin 46, the to-be-engaged portion 52 has a spherical shape. The engaging portion 54 of the mold pin 46 is formed in such a shape that, in a state where the to-be-engaged portion 52 is engaged with the engaging portion 54, the pin hole formation portion 50 can swing about a 360° direction. Specifically, at the upper side of a through hole 54a of the engaging portion 54, that is, at an internal space 48a side of the mounted portion 48, a counter bore 56 is formed around the through hole 54a so as to be recessed in a spherical shape. As shown in FIG. 5(a), the spherical to-be-engaged portion 52 can slide on the counter bore 56. At the lower side of the through hole 54a of the engaging portion 54, a cut 58 is formed around the through hole 54a so as to be open downward in a conical shape. The pin hole formation portion 50 that is swinging can come into contact with the cut 58 (shown by alternate long and two short dashes lines in FIG. 5(a)). In this manner, the pin hole formation portion 50 that has been extended such that the to-be-engaged portion 52 is engaged with the engaging portion 54 can swing about a 360° direction. When the pin hole formation portion 50 is pressed into the internal space 48a of the mounted portion 48, the to-be-engaged portion 52 comes into contact with the upper end within the mounted portion 48 to stop (FIG. 5(b)) .

FIG. 5(c) illustrates the attitude of the mold pin 46 when the segment 4 is opened after end of vulcanization of the tire T. Since the pin hole formation portion 50 can swing relative to the mounted portion 48 when being extended, the friction between the pin hole formation portion 50 and the spike pin hole PH can be further reduced. This effect is more effective for the mold pin 46 that is provided so as to project near each of both ends of the cavity surface of the segment 4, not at the center of the cavity surface of the segment 4. This is because, at the mold pin 46 disposed so, the moving direction M of the segment 4 is tilted relative to the central axis of the mold pin 46 (FIG. 5(c)). In addition, in this case, it is further preferable if the length by which the pin hole formation portion 50 can be extended is shortened according to need.

The mold pin 46 in FIG. 5 can be said to be generally a mold pin obtained by changing the to-be-engaged portion 42 of the mold pin 34 in FIG. 4 into a spherical shape and forming the spherical surface-shaped counter bore 56 and the conical cut 58 in the engaging portion 44. The swing-type mold pin is not limited to such a configuration. For example, a mold pin may be used which is obtained by changing the to-be-engaged portion 28 at the base end of the extensible portion 24 of the mold pin 14 in FIG. 3 into a spherical shape and forming a spherical surface-shaped counter bore and a conical cut in the engaging portion 30 at the tip end of the base portion 22.

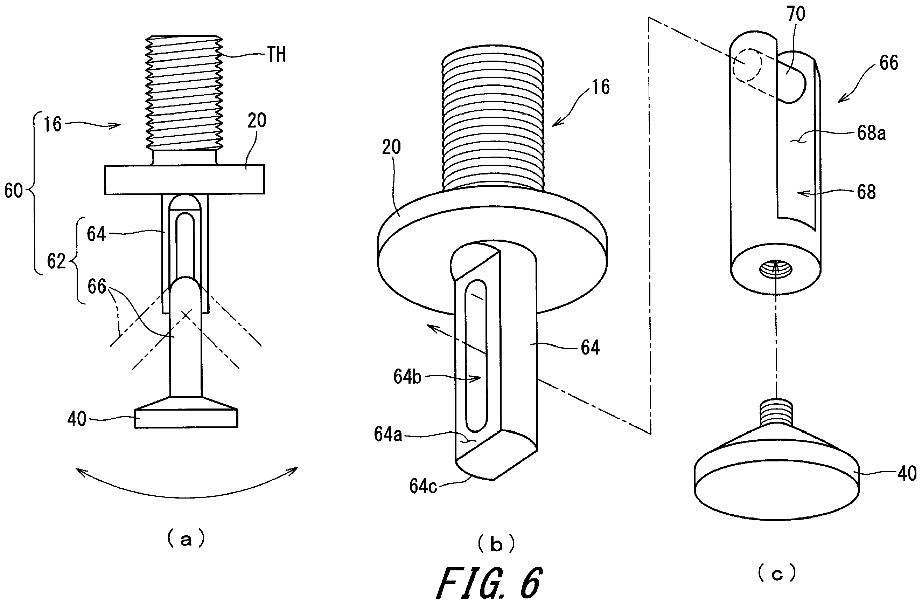

FIG. 6 shows another mold pin 60. The mold pin 60 includes a mounted portion 16 and a pin hole formation portion 62 which is coaxially joined in series to the mounted portion 16. The mounted portion 16 has the same configuration as the mounted portion 16 of the mold pin 14 in FIG. 3, and thus the description thereof is omitted. As shown in FIG. 6(a), the pin hole formation portion 62 includes: a base portion 64 which is fixed to a tip end of the mounted portion 16; and an extensible portion 66 which is connected to the base portion 64 so as to be able to advance and retract relative to the base portion 64 in the central axis direction and be swingable relative to the base portion 64. The extensible portion 66 includes an expanded portion 40 formed at a tip end thereof.

As shown in FIG. 6(b), the base portion 64 is integrated with the mounted portion 16 through integral formation or the like by means of welding, screw-in, or machining. The base portion 64 is formed from a columnar member. The base portion 64 has a pair of flat surfaces 64a which are formed at both sides across a center line of the columnar member by cutting the columnar member such that the flat surfaces 64a are parallel to each other. The base portion 64 has a long hole 64b formed so as to extend in the central axis direction thereof and penetrate from one of the flat surfaces 64a to the other flat surface 64a.

As shown in FIG. 6(c), the extensible portion 66 is formed from a columnar member. The extensible portion 66 has a recess 68 formed along the central axis direction thereof by cutting the columnar member from an upper end thereof to a position near a lower end thereof. The recess 68 has an internal shape complementary to the outer shape of the base portion 64. That is, the recess 68 has: a pair of flat surfaces 68a which are parallel to the central axis of the extensible portion 66 and opposed to each other; and a bottom 68b formed at a tip end thereof. When the extensible portion 66 is assembled to the base portion 64, the flat surfaces 68a are parallel, close, and opposed to the pair of flat surfaces 64a of the base portion 64. Near a base end (upper end) of the recess 68, a shaft member 70 is provided so as to extend between the pair of flat surfaces 68a. The shaft member 70 is fixed through a mounting hole, which is formed in the extensible portion 66 and not shown, and the long hole 64b of the base portion 64 when the extensible portion 66 is fitted to the base portion 64.

As the shaft member 70 moves along the long hole 64b, the extensible portion 66 is displaced in the central axis direction of the mounted portion 16. The long hole 64b is a guide space for the extensible portion 66. When the extensible portion 66 is pulled out from the base portion 64, the shaft member 70 comes into engagement with a tip end portion 64c of the long hole 64b of the base portion 64 to stop (FIG. 6(a)). It can be said that the tip end portion 64c of the long hole 64b is an engaging portion and the shaft member 70 is a to-be-engaged portion.

In the mold pin 60, the pin hole formation portion 62 is not configured to be rotatable about the central axis. However, it is easy to make the pin hole formation portion 62 rotatable. For example, it is only necessary to form the mounted portion 16 into a cylindrical shape and connect the base portion 64 of the pin hole formation portion 62 to the mounted portion 16 by using the to-be-engaged portion 42 and the engaging portion 44 as shown in FIG. 4. In addition, it is also easy to make the expanded portion 40 rotatable relative to the extensible portion 66 by using the same configuration as in FIG. 4.

Each of the mold pins 14, 34, 46, and 60 described above is configured such that the expanded portion is extendable and retractable. In addition to the extendable and retractable configuration, the expanded portion can be configured to be rotatable about the central axis of the expanded portion relative to the mounted portion. Furthermore, in addition to these configurations, the entire pin hole formation portion can be configured to be swingable relative to the mounted portion. Alternatively, a portion including the expanded portion, of the pin hole formation portion, can be configured to be swingable relative to the mounted portion. Due to a motion of such an expanded portion, the friction between the spike pin hole PH and the pin hole formation portion is reduced when the mold is opened. Catching of the pin hole formation portion by the spike pin hole PH is reduced.

As shown representatively in FIG. 4, in the mold pins 14, 34, 46, and 60 each including the pin hole formation portion having the expanded portion at the tip end thereof, the maximum outer diameter of a portion of the pin hole formation portion 38 excluding the expanded portion 40 is denoted by B, and the maximum outer diameter of the expanded portion 40 is denoted by A. In this case, the ratio A/B of the outer diameter A relative to the outer diameter B is preferably not less than 1.2 and not greater than 3.5. If the ratio A/B is greater than 3.5, even when silicone application or the like is performed on the cavity surface 12 of the mold 2 or the mold pin, the expanded portion 40 may be caught by the opening edge of the spike pin hole PH. In this case, it is difficult to remove the tire T from the segment 4 of the mold 2. If the ratio A/B is not greater than 3.5, the spike pin hole PH including the effective diameter-enlarged portion at the bottom of the spike pin hole PH can be formed. However, if the ratio A/B is less than 1.2, it may become difficult to form an effective diameter-enlarged portion for engagement, in the spike pin hole PH.

The maximum outer diameter A of the expanded portion is preferably not less than 4.8 mm and not greater than 7.5 mm. If the maximum outer diameter A is less than 4.8 mm, the diameter-enlarged portion of the spike pin hole becomes small, and it may become difficult to drive in a spike pin having a flange. On the other hand, if the maximum outer diameter A exceeds 7.5 mm, the diameter-enlarged portion of the spike pin hole becomes large, and pin falling-off prevention performance for a spike pin having a flange may decrease.

The maximum outer diameter B of the pin hole formation portion is preferably not less than 2.0 mm and not greater than 3.5 mm. If the maximum outer diameter B is less than 2.0 mm, it may become difficult to drive in a spike pin. On the other hand, if the maximum outer diameter B exceeds 3.5 mm, pin falling-off prevention performance for a spike pin may decrease.

The assumption that the maximum thickness of the expanded portion 40 and the maximum thickness of the pin hole formation portion 38 are the maximum outer diameters A and B is that the expanded portion 40 and the pin hole formation portion 38 each have a circular cross-section such as a columnar outer shape. For example, the mold pins 14, 34, 46, 60, and the like shown in FIGS. 3 to 6 fall within this. However, a cross-sectional shape of each of the pin hole formation portion and the expanded portion may be a regular polygon such as a square, a regular hexagon, or the like. In this case, the above A and B each represent a maximum diagonal line length.

As shown representatively in FIG. 4, the length, in the central axis direction, by which the pin hole formation portion 38 projects from the mounted portion 36 when the expanded portion 40 and the pin hole formation portion 38 are not extended is denoted by D1. The length, in the central axis direction, by which the pin hole formation portion 38 projects from the mounted portion 36 when the expanded portion 40 and the pin hole formation portion 38 are fully extended is denoted by D2. In this case, the ratio D2/D1 of D2 relative to D1 is preferably not less than 1.2 and not greater than 1.8. If the ratio D2/D1 is less than 1.2, the effect of improvement in "mold taking" may reduce. On the other hand, if the ratio D2/D1 is greater than 1.8, the extension/retraction stroke of the pin hole formation portion 38 is excessively large, and "mold taking" may occur.

The length D1 when the pin hole formation portion 38 is shortened is preferably not less than 8.5 mm and not greater than 10.5 mm in light of being adapted to an optimum length of the spike pin. If the length D1 is less than 8.5 mm, the amount by which the spike pin projects from the tread surface becomes large, and the spike pin may be likely to fall off. If the length D1 exceeds 10.5 mm, the amount by which the spike pin projects from the tread surface may become small. When the preferable range (not less than 8.5 mm and not greater than 10.5 mm) of the length D1 and the aforementioned preferable range (not less than 1.2 and not greater than 1.8) of the ratio D2/D1 are taken into consideration, it can be said that the preferable range of the length D2 in the central axis direction when the expanded portion 40 and the pin hole formation portion 38 are fully extended is not less than 10.2 mm and not greater than 18.9 mm.

In order to further enhance the effect of preventing "mold taking", that is, in order to ensure releasability between the mold and the tire T, a surface treatment for friction reduction is preferably performed on the surface of the tire T, the cavity surface of the mold, and each mold pin. Examples of the surface treatment include silicone coating, fluorine coating, and the like. In particular, metal plating, shot blasting, and the like can be also used for the cavity surface which is a metal surface. Since the mold pin includes a movable portion, metal plating, particularly, hard chromium plating is preferable.

As the material of the mold pin, structural carbon steel, particularly, S45C is preferable. In this case, plating with a low friction coefficient, such as hard chromium plating or the like, is preferably applied to the surface of the pin.

The mold is cleaned preferably through laser cleaning, not by a conventional method with a shot material. This is because, since the mold pin having an extensible structure is mounted, remnants of the rubber may accumulate, and thus a cleaning method which can effectively remove the remnants, such as laser cleaning, is preferable.

When the length of the pin hole formation portion of each of the aforementioned mold pins 14, 34, 46, and 60 when the pin hole formation portion is shortened is denoted by D1, the ratio C/D1 of a depth C (not shown) of the spike pin hole PH of the vulcanized tire T which is formed by the pin hole formation portion, relative to the length D1, is about 0.95. This is due to shrinkage of the rubber.

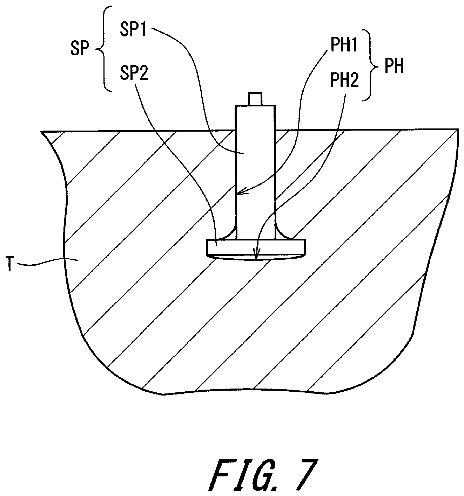

Even when any of the mold pins 14, 34, 46, and 60 described above is used, a spike pin hole PH as shown in FIG. 7 is formed in the tread of the tire T. The spike pin hole PH includes a shaft hole portion PH1 having a shape corresponding to the pin hole formation portion of the mold pin. In addition, a diameter-enlarged portion PH2 having a shape corresponding to the expanded portion of the mold pin is also formed. Due to shrinkage of the rubber after vulcanization, the spike pin hole PH has a shape which is substantially similar to and slightly smaller than that of the mold pin. The diameter-enlarged portion PH2 is formed at or near a deep end of the shaft hole portion PH1. A spike pin SP is mounted into the spike pin hole PH as shown. The outer shape of the spike pin SP is slightly larger than the shape of the spike pin hole PH. The spike pin SP includes a columnar main body SP1 and a disc-shaped flange portion SP2 which is coaxially formed at a base end of the main body SP1. The outer diameter of the flange portion SP2 is larger than the outer diameter of the main body SP1. When the spike pin SP is mounted into the spike pin hole PH, the flange portion SP2 is fitted into the diameter-enlarged portion PH2. The spike pin SP is not limited to the one having the shape shown in FIG. 7.

### EXAMPLES

The following will show effects of the present invention by means of examples, but the present invention should not be construed in a limited manner based on the description of these examples.

As examples and comparative examples, a plurality of types of mold pins basically having the structures in FIGS. 4 to 8 etc. were prepared. The respective mold pins have structures and dimensions different from each other, as shown in Tables 1 to 3. By using molds having these mold pins mounted thereon, test tires having spike pin holes corresponding to the outer shapes and dimensions of the respective mold pins were manufactured. The molds of all the examples excluding the mold pins have the same specifications. The size of each test tire is 205/60R16. An evaluation test as to easiness of removing a tire from a mold (a mold taking evaluation test) and a tire scar evaluation test by visual observation were performed for all the test tires.

### [Mold Taking Evaluation Test]

By using a mold having the mold pins of each later-described example mounted thereon, 100 tires were manufactured in each example. The number of tires that were able to be taken out from the mold without any problem when the mold was opened during manufacturing of the test tire was indexed. The greater the index is, the better the result is. In this case, if the segment was opened while the tire was attached to the segment, this was determined as mold taking.

### [Tire Scar Evaluation Test]

The number of scars appearing, due to influence of the mold pins, on the surface of each tire manufactured with the mold having the mold pins of each later-described example mounted thereon was measured. In each example, 100 tires were manufactured (the tires subjected to the above mold taking evaluation test). The number of tires in which occurrence of a scar was not recognized through visual observation when each tire was taken out from the mold, of the 100 tires, was indexed. The greater the index is, the better the result is.

### [Examples 1 to 3]

As each of Examples 1 to 3, a predetermined number of mold pins each obtained by slightly changing the structure of the mold pin 34 shown in FIG. 4 were manufactured. As described above, these mold pins are ones each obtained by forming a guide groove in the central axis direction on an inner wall surface of the mounted portion 36 of the mold pin 34 in FIG. 4 and forming, on the outer peripheral surface of the to-be-engaged portion 42 of the pin hole formation portion 38, a to-be-guided projection portion to be engaged with the guide groove. Due to such a configuration, each of the mold pins is configured such that the pin hole formation portion can advance and retract relative to the mounted portion but is not rotatable and swingable relative to the mounted portion. The specifications of the mold pins of Examples 1 to 3 are the same, except those shown in Table 1. A mold having these mold pins mounted thereon was used, and the aforementioned tests were performed. The evaluation results obtained by the tests are as shown in Table 1.

### [Example 4]

As Example 4, a predetermined number of mold pins having the same structure as in Example 1 described above were manufactured. The mold pins differ from the mold pins of Example 1 only in that silicone was applied to the entire range of a portion of each mold pin that was exposed from the mold on which the mold pin was mounted. A mold having these mold pins mounted thereon was used, and the aforementioned tests were performed. The evaluation results obtained by the tests are as shown in Table 1.

### [Comparative Example 1]

As Comparative Example 1, a predetermined number of mold pins having a basic structure shown in FIG. 8(a) were manufactured on the basis of the specifications shown in Table 1. These mold pins each do not have an expanded portion at the tip end of the pin hole formation portion thereof. Therefore, similarly as in Comparative Example 4 described later, no diameter-enlarged portion is formed in each spike pin hole of a tire manufactured with the mold pins of Comparative Example 1. As a result, although not shown in Table 1, pin falling-off prevention performance for a spike pin is much inferior as compared to not only the Examples but also Comparative Examples 2 and 3. In addition, in each of these mold pins, the pin hole formation portion thereof is fixed relative to the mounted portion and does not advance and retract, rotate, and swing relative to the mounted portion. A mold having these mold pins mounted thereon was used, and the aforementioned tests were performed. The evaluation results obtained by the tests are as shown in Table 1. The other configurations of these mold pins and the test procedure are the same as in Example 1.

### [Comparative Examples 2 and 3]

As each of Comparative Examples 2 and 3, a predetermined number of mold pins having a basic structure shown in FIG. 8(b) were manufactured on the basis of the specifications shown in Table 1. In each of these mold pins, the pin hole formation portion thereof is fixed relative to the mounted portion and does not advance and retract, rotate, and swing relative to the mounted portion. A mold having these mold pins mounted thereon was used, and the aforementioned tests were performed. The evaluation results obtained by the tests are as shown in Table 1. The other configurations of these mold pins and the test procedure are the same as in Example 1.

### [Examples 5 to 10]

As each of Examples 5 to 10, a predetermined number of mold pins each obtained by slightly changing the structure of the mold pin 34 shown in FIG. 4 were manufactured. These mold pins are ones each obtained by forming a guide groove in the central axis direction on an inner wall surface of the mounted portion 36 of the mold pin 34 in FIG. 4 and forming, on the outer peripheral surface of the to-be-engaged portion 42 of the pin hole formation portion 38, a to-be-guided projection portion to be engaged with the guide groove. Due to such a configuration, each of the mold pins is configured such that the pin hole formation portion can advance and retract relative to the mounted portion but is not rotatable and swingable relative to the mounted portion. The specifications of the mold pins of Examples 5 to 10 are the same as in Example 1, except those shown in Table 2. A mold having these mold pins mounted thereon was used, and the aforementioned tests were performed. The evaluation results obtained by the tests are as shown in Table 2.

### [Comparative Example 4]

As Comparative Example 4, a predetermined number of mold pins each obtained by slightly changing the structure of the mold pin 34 shown in FIG. 4 were manufactured on the basis of the specifications shown in Table 2. These mold pins are ones obtained by forming a guide groove in the central axis direction on an inner wall surface of the mounted portion 36 of the mold pin 34 in FIG. 4 and forming, on the outer peripheral surface of the to-be-engaged portion 42 of the pin hole formation portion 38, a to-be-guided projection portion to be engaged with the guide groove. Due to such a configuration, each of the mold pins is configured such that the pin hole formation portion can advance and retract relative to the mounted portion but is not rotatable and swingable relative to the mounted portion. Furthermore, the expanded portion 40 is eliminated from the tip end of the pin hole formation portion 38. The specifications of the mold pins of Comparative Example 4 are the same as in Example 1, except those shown in Table 2. A mold having these mold pins mounted thereon was used, and the aforementioned tests were performed. The evaluation results obtained by the tests are as shown in Table 2.

### [Examples 11 to 13]

Mold pins of Examples 11 to 13 were prepared. These mold pins differ from each other in allowable motion of the pin hole formation portion. The mold pin of Example 11 is configured such that the pin hole formation portion thereof is able to advance and retract relative to the mounted portion and to swing relative to the mounted portion but is not rotatable relative to the mounted portion. The mold pin of Example 12 is configured such that the pin hole formation portion thereof is able to advance and retract relative to the mounted portion and to rotate relative to the mounted portion but is not swingable relative to the mounted portion. The mold pin of Example 13 is configured such that the pin hole formation portion thereof is able to advance and retract, rotate, and swing relative to the mounted portion. The respective mold pins of Examples 11 to 13 and the mold pin of Example 1 in which the pin hole formation portion is able to advance and retract relative to the mounted portion and is not rotatable and swingable relative to the mounted portion were compared for performance regarding each of tire scar and mold taking.

### [Example 11]

As Example 11, a predetermined number of mold pins having a basic structure shown in FIG. 6 were manufactured on the basis of the specifications shown in Table 3. Each of these mold pins is configured such that the pin hole formation portion thereof is able to advance and retract, and swing relative to the mounted portion but is not rotatable about the central axis relative to the mounted portion. The specifications of the mold pins of Example 11 are the same as in Example 1, except those shown in Table 3. A mold having these mold pins mounted thereon was used, and the aforementioned tests were performed. The evaluation results obtained by the tests are as shown in Table 3.

### [Example 12]

As Example 12, a predetermined number of mold pins having a basic structure shown in FIG. 4 were manufactured on the basis of the specifications shown in Table 3. Each of these mold pins is configured such that the pin hole formation portion thereof is able to advance and retract, and rotate about the central axis relative to the mounted portion but is not swingable relative to the mounted portion. The specifications of the mold pins of Example 12 are the same as in Example 1, except those shown in Table 3. A mold having these mold pins mounted thereon was used, and the aforementioned tests were performed. The evaluation results obtained by the tests are as shown in Table 3.

### [Example 13]

As Example 13, a predetermined number of mold pins having a basic structure shown in FIG. 5 were manufactured on the basis of the specifications shown in Table 3. Each of these mold pins is configured such that the pin hole formation portion thereof is able to advance and retract, swing, and rotate about the central axis, relative to the mounted portion. The specifications of the mold pins of Example 13 are the same as in Example 1, except those shown in Table 3. A mold having these mold pins mounted thereon was used, and the aforementioned tests were performed. The evaluation results obtained by the tests are as shown in Table 3.

### [Evaluation Results]

Tables 1 and 2 show the evaluation results regarding the performance of the mold pins of Examples 1 to 10 and Comparative Examples 1 to 4. In each of the Examples, favorable evaluation results are obtained as compared to Comparative Examples 3 and 4. Meanwhile, Comparative Examples 1 and 4 also have high evaluation. However, the mold pins of Comparative Examples 1 and 4 do not have an expanded portion required to improve pin falling-off prevention performance for a spike pin. As a result, the tires manufactured with the mold pins of Comparative Examples 1 and 4 had greatly decreased pin falling-off prevention performance for a spike pin, which is one of the purposes of the present invention, as compared to the Examples and Comparative Examples 2 and 3. From the above evaluation results, advantages of the present invention are clear. In addition, when Examples 1, 11, 12, and 13 are compared, it is obvious that the more the kinds of possible motions (advancement and retraction, rotation, swinging) of the pin hole formation portion relative to the mounted portion is, the better the result is.

### [Table 1]

**Table 1 Performance Evaluation Results of Mold Pins for Spike Tire**

| | Comp. Ex. 1 | Comp. Ex. 2 | Comp. Ex. 3 | Ex. 1 | Ex. 2 | Ex. 3 | Ex. 4 |
|---|---|---|---|---|---|---|---|
| Specification of pin | | | | | | | |
| Dimension A (mm) | 2.5 | 9.0 | 6.0 | 6.0 | 6.0 | 6.0 | 6.0 |
| Dimension B (mm) | 2.5 | 2.5 | 2.5 | 2.5 | 2.5 | 2.5 | 2.5 |
| Ratio A/B | 1.0 | 3.6 | 2.4 | 2.4 | 2.4 | 2.4 | 2.4 |
| Dimension D2 (mm) | 9 | 9 | 9 | 12 | 18 | 10 | 12 |
| Dimension D1 (mm) | 9 | 9 | 9 | 9 | 9 | 9 | 9 |
| Ratio D2/D1 | 1.0 | 1.0 | 1.0 | 1.3 | 2.0 | 1.1 | 1.3 |
| Silicone application | Abs. | Abs. | Abs. | Abs. | Abs. | Abs. | Pres. |
| Scar of tire | 100 | 50 | 75 | 90 | 65 | 75 | 100 |
| Mold taking | 100 | 40 | 75 | 85 | 85 | 80 | 100 |

| | | | | | | | |
|---|---|---|---|---|---|---|---|
| Comp.Ex. ··· Comparative Example Ex. ··· Example Abs. ··· Absence Pres. ··· Presence | | | | | | | |

### [Table 2]

**Table 2 Performance Evaluation Results of Mold Pins for Spike Tire**

| | Comp. Ex. 4 | Ex. 5 | Ex. 6 | Ex. 7 | Ex. 8 | Ex. 9 | Ex. 10 |
|---|---|---|---|---|---|---|---|
| Specification of pin | | | | | | | |
| Dimension A (mm) | 2.5 | 6.0 | 9.0 | 4.0 | 8.5 | 3.5 | 6.0 |
| Dimension B (mm) | 2.5 | 2.5 | 2.5 | 2.5 | 2.5 | 2.5 | 2.5 |
| Ratio A/B | 1.0 | 2.4 | 3.6 | 1.6 | 3.4 | 1.4 | 2.4 |
| Dimension D2 (mm) | 12 | 13.5 | 12 | 12 | 12 | 12 | 15 |
| Dimension D1 (mm) | 9 | 9 | 9 | 9 | 9 | 9 | 9 |
| Ratio D2/D1 | 1.3 | 1.5 | 1.3 | 1.3 | 1.3 | 1.3 | 1.7 |
| Silicone application | Abs. | Abs. | Abs. | Abs. | Abs. | Abs. | Abs. |
| Scar of tire | 100 | 70 | 60 | 95 | 60 | 95 | 70 |
| Mold taking | 100 | 80 | 80 | 85 | 85 | 85 | 80 |

| | | | | | | | |
|---|---|---|---|---|---|---|---|
| Comp.Ex. ··· Comparative Example Ex. ··· Example Abs. ··· Absence Pres. ··· Presence | | | | | | | |

### [Table 3]

**Table 3 Performance Evaluation Results of Mold Pins for Spike Tire**

| | Ex. 1 | Ex. 11 | Ex. 12 | Ex. 13 |
|---|---|---|---|---|
| Specification of pin | | | | |
| Dimension A (mm) | 6.0 | 6.0 | 6.0 | 6.0 |
| Dimension B (mm) | 2.5 | 2.5 | 2.5 | 2.5 |
| Ratio A/B | 2.4 | 2.4 | 2.4 | 2.4 |
| Dimension D2 (mm) | 12 | 12 | 12 | 12 |
| Dimension D1 (mm) | 9 | 9 | 9 | 9 |
| Ratio D2/D1 | 1.3 | 1.3 | 1.3 | 1.3 |
| Swinging of pin | Abs. | Pres. | Abs. | Pres. |
| Rotation of pin | Abs. | Abs. | Pres. | Pres. |
| Scar of tire | 90 | 100 | 95 | 100 |
| Mold taking | 85 | 95 | 95 | 100 |

| | | | | |
|---|---|---|---|---|
| Comp.Ex. ··· Comparative Example Ex. ··· Example Abs. ··· Absence Pres. ··· Presence | | | | |

### INDUSTRIAL APPLICABILITY

The mold according to the present invention is applicable to manufacture of various tires.

### DESCRIPTION OF THE REFERENCE CHARACTERS

2 ··· (tire) mold
4 ··· segment
6 ··· side plate
8 ··· bead ring
10 ··· bladder
12 ··· cavity surface
14, 34, 46, 60 ··· mold pin
16, 36, 48 ··· mounted portion
18, 38, 50, 62 ··· pin hole formation portion
20 ··· disc portion
22, 64 ··· base portion
22a ··· internal space (of base portion)
24, 66 ··· extensible portion
26, 40 ··· expanded portion
28, 42, 52 ··· to-be-engaged portion
30, 44, 54 ··· engaging portion
36a, 48a ··· internal space (of mounted portion)
56 ··· counter bore
58 ··· cut
64a ··· long hole (of base portion)
68 ··· recess
70 ··· shaft member
PH ··· spike pin hole
PH1 ··· shaft hole portion
PH2 ··· diameter-enlarged portion
R ··· raw cover
SP ··· spike pin
SP1··· main body
SP2 ··· flange portion
T ··· tire

## Claims

1. A mold pin (14, 34, 46, 60) for forming a spike pin mounting hole (PH) in a tread surface of a tire (T), the mold pin (14, 34, 46, 60) comprising:
a mounted portion (16, 36, 48) which is a portion to be inserted into a mold (2) and fixed; and
a pin hole formation portion (18, 38, 50, 62) which is a portion to be buried in the tire (T) to form a spike pin hole (PH), wherein
the pin hole formation portion (18, 38, 50, 62) includes an expanded portion (26, 40) formed at or near a tip end thereof, and
the expanded portion (26, 40) is configured to be displaceable relative to the mounted portion (16, 36, 48) in a central axis direction of the pin hole formation portion (18, 38, 50, 62), wherein
the mounted portion (36, 48) includes: a guide space formed so as to be coaxial with the pin hole formation portion (38, 50); and an engaging portion (44, 54) formed within the guide space,
the pin hole formation portion (38, 50) includes a to-be-engaged portion (42, 52) formed at a base end thereof,
displacement of the pin hole formation portion (38, 50) in the central axis direction is guided by the guide space, and
separation of the pin hole formation portion (38, 50) from the guide space is prevented by the to-be-engaged portion (42, 52) being engaged with the engaging portion (44, 54) or wherein
the pin hole formation portion (18, 62) includes: a base portion (22, 64) fixed to the mounted portion (16); and an extensible portion (24, 66) displaceable in a central axis direction of the base portion (22, 64),
the expanded portion (26, 40) is formed at or near a tip end of the extensible portion (24, 66),
the base portion (22, 64) includes a coaxial guide space and an engaging portion (30, 64c) formed within the guide space,
the extensible portion (24, 66) includes a to-be-engaged portion (28, 70) formed at a base end thereof,
displacement of the extensible portion (24, 66) in the central axis direction of the base portion (22, 64) is guided by the guide space, and
separation of the extensible portion (24, 66) from the guide space is prevented by the to-be-engaged portion (28, 70) being engaged with the engaging portion (30, 64c).

2. The mold pin (14, 34, 46, 60) according to claim 1, wherein the expanded portion (26, 40) is configured to be rotatable relative to the mounted portion (16, 36, 48) about a central axis of the expanded portion (26, 40).

3. The mold pin (14, 34, 46, 60) according to claim 1 or 2, wherein at least the expanded portion (26, 40), of the pin hole formation portion (18, 38, 50, 62) and the expanded portion (26, 40), is configured to be swingable relative to the mounted portion (16, 36, 48).

4. The mold pin (14, 34, 46, 60) according to claim 3, wherein the mold pin (14, 34, 46, 60) is configured such that the swing is enabled when the displacement of the expanded portion (26, 40) reaches a maximum.

5. The mold pin (14, 34, 46, 60) according to any one of claims 1 to 4, wherein a ratio D2/D1 of a length D2 in the central axis direction of the pin hole formation portion (18, 38, 50, 62) when the displacement in the central axis direction of the expanded portion (26, 40) is the maximum, relative to a length D1 in the central axis direction of the pin hole formation portion (18, 38, 50, 62) when the expanded portion (26, 40) is not displaced in the central axis direction, is selected from a range of not less than 1.2 and not greater than 1.8.

6. The mold pin (14, 34, 46, 60) according to any one of claims 1 to 5, wherein
the pin hole formation portion (18, 38, 50, 62) has a columnar outer shape,
the expanded portion (26, 40) has a disc-like outer shape, and
a ratio A/B of a diameter A of the expanded portion (26, 40) relative to a diameter B of the pin hole formation portion (18, 38, 50, 62) is not less than 1.2 and not greater than 3.5.

7. A tire mold (2) comprising:
a plurality of segments (4) disposed in a ring shape and each having a molding cavity surface having a circular arc shape in a plan view; and
a pair of upper and lower side plates (6) disposed radially inward of each segment and each having a molding cavity surface, wherein
a plurality of mold pins (14, 34, 46, 60) are provided on the cavity surface of each of the segments (4) so as to project therefrom,
a direction in which each of the mold pins (14, 34, 46, 60) projects is directed toward a center of the circular arc of the cavity surface, and
each of the mold pins (14, 34, 46, 60) is formed of the mold pin (14, 34, 46, 60) according to any one of claims 1 to 6.

8. The tire mold (2) according to claim 7, wherein at least the mold pins (14, 34, 46, 60), of the cavity surface and the mold pins (14, 34, 46, 60), are subjected to a surface treatment for friction reduction.

## Patentansprüche

1. Formstift (14, 34, 46, 60) zum Bilden eines Spikestiftmontagelochs (PH) in einer Laufflächen-Oberfläche eines Reifens (T), wobei der Formstift (14, 34, 46, 60) umfasst:
einen montierten Abschnitt (16, 36, 48), der ein Abschnitt ist, der in eine Form (2) einzusetzen und zu befestigen ist; und
einen Stiftlochbildungsabschnitt (18, 38, 50, 62), der ein Abschnitt ist, der in den Reifen (T) einzulassen ist, um ein Spikestiftloch (PH) zu bilden, wobei
der Stiftlochbildungsabschnitt (18, 38, 50, 62) einen erweiterten Abschnitt (26, 40) umfasst, der an oder nahe einem Spitzenende davon ausgebildet ist, und
der erweiterte Abschnitt (26, 40) derart konfiguriert ist, dass er relativ zu dem montierten Abschnitt (16, 36, 48) in einer Mittelachsenrichtung des Stiftlochbildungsabschnitts (18, 38, 50, 62) verschiebbar ist, wobei
der montierte Abschnitt (36, 48) umfasst: einen Führungsraum, der so ausgebildet ist, dass er koaxial zu dem Stiftlochbildungsabschnitt (38, 50) ist; und einen Eingriffsabschnitt (44, 54), der innerhalb des Führungsraums ausgebildet ist,
der Stiftlochbildungsabschnitt (38, 50) einen in Eingriff zu bringenden Abschnitt (42, 52) umfasst, der an einem Basisende davon ausgebildet ist,
eine Verschiebung des Stiftlochbildungsabschnitts (38, 50) in der Mittelachsenrichtung durch den Führungsraum geführt ist, und
eine Trennung des Stiftlochbildungsabschnitts (38, 50) von dem Führungsraum verhindert wird, indem der in Eingriff zu bringende Abschnitt (42, 52) mit dem Eingriffsabschnitt (44, 54) in Eingriff steht, oder wobei der Stiftlochbildungsabschnitt (18, 62) umfasst: einen Basisabschnitt (22, 64), der an dem montierten Abschnitt (16) befestigt ist; und einen erweiterbaren Abschnitt (24, 66), der in einer Mittelachsenrichtung des Basisabschnitts (22, 64) verschiebbar ist,
wobei der erweiterte Abschnitt (26, 40) an oder nahe einem Spitzenende des erweiterbaren Abschnitts (24, 66) ausgebildet ist,
der Basisabschnitt (22, 64) einen koaxialen Führungsraum und einen Eingriffsabschnitt (30, 64c) umfasst, der in dem Führungsraum ausgebildet ist,
der erweiterbare Abschnitt (24, 66) einen in Eingriff zu bringenden Abschnitt (28, 70) umfasst, der an einem Basisende davon ausgebildet ist,
eine Verschiebung des erweiterbaren Abschnitts (24, 66) in der Mittelachsenrichtung des Basisabschnitts (22, 64) durch den Führungsraum geführt ist, und
eine Trennung des erweiterbaren Abschnitts (24, 66) von dem Führungsraum verhindert wird, indem der in Eingriff zu bringende Abschnitt (28, 70) mit dem Eingriffsabschnitt (30, 64c) in Eingriff steht.

2. Formstift (14, 34, 46, 60) nach Anspruch 1, wobei der erweiterte Abschnitt (26, 40) derart konfiguriert ist, dass er relativ zu dem montierten Abschnitt (16, 36, 48) um eine Mittelachse des erweiterten Abschnitts (26, 40) drehbar ist.

3. Formstift (14, 34, 46, 60) nach Anspruch 1 oder 2, wobei mindestens der erweiterte Abschnitt (26, 40), des Stiftlochbildungsabschnitts (18, 38, 50, 62) und des erweiterten Abschnitts (26, 40), derart konfiguriert ist, dass er in Bezug auf den montierten Abschnitt (16, 36, 48) schwenkbar ist.

4. Formstift (14, 34, 46, 60) nach Anspruch 3, wobei der Formstift (14, 34, 46, 60) derart konfiguriert ist, dass der Schwenk ermöglicht wird, wenn die Verschiebung des erweiterten Abschnitts (26, 40) ein Maximum erreicht.

5. Formstift (14, 34, 46, 60) nach einem der Ansprüche 1 bis 4, wobei ein Verhältnis D2/D1 einer Länge D2 in der Mittelachsenrichtung des Stiftlochbildungsabschnitts (18, 38, 50, 62), wenn die Verschiebung in der Mittelachsenrichtung des erweiterten Abschnitts (26, 40) das Maximum ist, bezogen auf eine Länge D1 in der Mittelachsenrichtung des Stiftlochbildungsabschnitts (18, 38, 50, 62), wenn der erweiterte Abschnitt (26, 40) nicht in der Mittelachsenrichtung verschoben ist, aus einem Bereich von nicht weniger als 1,2 und nicht mehr als 1,8 ausgewählt ist.

6. Formstift (14, 34, 46, 60) nach einem der Ansprüche 1 bis 5, wobei
der Stiftlochbildungsabschnitt (18, 38, 50, 62) eine säulenförmige Außenform aufweist,
der erweiterte Abschnitt (26, 40) eine scheibenartige Außenform aufweist, und
ein Verhältnis A/B eines Durchmessers A des erweiterten Abschnitts (26, 40) in Bezug auf einen Durchmesser B des Stiftlochbildungsabschnitts (18, 38, 50, 62) nicht weniger als 1,2 und nicht mehr als 3,5 beträgt.

7. Reifenform (2), umfassend:
eine Vielzahl von Segmenten (4), die in einer Ringform angeordnet sind und jeweils eine Formhohlraumoberfläche mit einer Kreisbogenform in einer Draufsicht aufweisen; und
ein Paar von oberen und unteren Seitenplatten (6), die radial innen von jedem Segment angeordnet sind und jeweils eine Formhohlraumoberfläche aufweisen, wobei
eine Vielzahl von Formstiften (14, 34, 46, 60) auf der Hohlraumoberfläche eines jeden der Segmente (4) derart vorgesehen ist, dass sie daraus vorstehen,
eine Richtung, in der jeder der Formstifte (14, 34, 46, 60) vorsteht, auf ein Zentrum des Kreisbogens der Hohlraumoberfläche gerichtet ist, und
ein jeder der Formstifte (14, 34, 46, 60) aus dem Formstift (14, 34, 46, 60) nach einem der Ansprüche 1 bis 6 gebildet ist.

8. Reifenform (2) nach Anspruch 7, wobei mindestens die Formstifte (14, 34, 46, 60), der Hohlraumoberfläche und der Formstifte (14, 34, 46, 60), einer Oberflächenbehandlung zur Reibungsreduzierung unterzogen sind.

## Revendications

1. Broche de moulage (14, 34, 46, 60) pour former un trou de montage de tige de clou (PH) dans une surface d'une bande de roulement d'un pneumatique (T), la broche de moulage (14, 34, 46, 60) comprenant :
une portion montée (16, 36, 48) qui est une portion qu'il s'agit d'insérer dans un moule (2) et de fixer ; et
une portion de formation de trou pour tige (18, 38, 50, 62) qui est une portion qu'il s'agit de percer dans le pneumatique (T) pour former un trou pour tige de clou (PH), dans laquelle
la portion de formation de trou pour tige (18, 38, 50, 62) inclut une portion en expansion (26, 40) formée à une extrémité de pointe de celle-ci ou à proximité, et
la portion en expansion (26, 40) est configurée pour être déplaçable par rapport à la portion montée (16, 36, 48) dans la direction de l'axe central de la portion de formation de trous pour tige (18, 38, 50, 62), dans laquelle la portion montée (36, 48) inclut : un espace de guidage formé de manière à être coaxial avec la portion de formation de trou pour tige (38, 50) ; et une portion d'engagement (44, 54) formée à l'intérieur de l'espace de guidage,
la portion de formation de trous pour tige (38, 50) inclut une portion qu'il s'agit d'engager (42, 52) formée à son extrémité de base,
un déplacement de la portion de formation de trous pour tige (38, 50) dans la direction de l'axe central est guidé par l'espace de guidage, et
une séparation de la portion de formation de trous pour tige (38, 50) vis-à-vis de l'espace de guidage est empêchée par la portion qu'il s'agit d'engager (42, 52) lorsqu'elle est engagée avec la portion d'engagement (44, 54), et/ou dans laquelle
la portion de formation de trous pour tige (18, 62) inclut : une portion de base (22, 64) fixée à la portion montée (16) ; et une portion extensible (24, 66) déplaçable dans la direction de l'axe central de la portion de base (22, 64),
la portion en expansion (26, 40) est formée à l'extrémité de pointe de la portion extensible (24, 66) ou à proximité,
la portion de base (22, 64) inclut un espace de guidage coaxial et une portion d'engagement (30, 64c) formée à l'intérieur de l'espace de guidage, la portion extensible (24, 66) inclut une portion qu'il s'agit d'engager (28, 70) formée à son extrémité de base,
un déplacement de la portion extensible (24, 66) dans la direction de l'axe central de la portion de base (22, 64) est guidé par l'espace de guidage, et une séparation de la portion extensible (24, 66) depuis l'espace de guidage est empêchée par la portion qu'il s'agit d'engager (28, 70) lorsqu'elle est engagée avec la portion d'engagement (30, 64c).

2. Broche de moulage (14, 34, 46, 60) selon la revendication 1, dans laquelle la portion en expansion (26, 40) est configurée pour être capable de rotation par rapport à la portion montée (16, 36, 48) autour d'un axe central de la portion en expansion (26, 40).

3. Broche de moulage (14, 34, 46, 60) selon la revendication 1 ou 2, dans laquelle au moins la portion en expansion (26, 40) de la portion de formation de trou pour tige (18, 38, 50, 62) et la portion en expansion (26, 40), est configurée pour être capable de pivoter par rapport à la portion montée (16, 36, 48).

4. Broche de moulage (14, 34, 46, 60) selon la revendication 3, dans laquelle la broche de moulage (14, 34, 46, 60) est configurée de telle manière que le pivotement est permis quand le déplacement de la portion en expansion (26, 40) atteint un maximum.

5. Broche de moulage (14, 34, 46, 60) selon l'une quelconque des revendications 1 à 4, dans lequel un rapport B2/D1 d'une longueur D2 dans la direction de l'axe central de la portion de formation de trou pour tige (18, 38, 50, 62) quand le déplacement dans la direction de l'axe central de la portion en expansion (26, 40) est maximum, par rapport à une longueur D1 dans la direction de l'axe central de la portion de formation de trou pour tige (18, 38, 50, 62) quand la portion en expansion (26, 40) n'est pas déplacée dans la direction de l'axe central, est sélectionné parmi une plage qui n'est pas inférieure à 1,2 et qui n'est pas supérieure à 1,8.

6. Broche de moulage (14, 34, 46, 60) selon l'une quelconque des revendications 1 à 5, dans laquelle
la portion de formation de trou pour tige (18, 38, 50, 62) a une forme extérieure semblable à une colonne,
la portion en expansion (26, 40) a une forme extérieure semblable à un disque, et
un rapport A/B d'un diamètre A de la portion en expansion (26, 40) par rapport à un diamètre B de la portion de formation de trou pour tige (18, 38, 50, 62) n'est pas inférieur à 1,2 et n'est pas supérieur à 3,5.

7. Moule pour pneumatique (2) comprenant :
une pluralité de segments (4) disposés dans une forme annulaire et ayant chacun une surface de cavité de moulage ayant une forme en arc circulaire dans une vue en plan ; et
une paire d'une plaque latérale supérieure et d'une plaque latérale inférieure (6) disposées radialement à l'intérieur de chaque segment et ayant chacune une surface de cavité de moulage, dans lequel une pluralité de broches de moulage (14, 34, 46, 60) sont prévues sur la surface de cavité de chacun des segments (4) de manière à se projeter depuis celle-ci,
une direction dans laquelle chacune des broches de moulage (14, 34, 46, 60) se projette est dirigée vers un centre de l'arc circulaire de la surface de la cavité, et
chacune des broches de moulage (14, 34, 46, 60) est formée de la broche de moulage (14, 34, 46, 60) en accord avec l'une quelconque des revendications 1 à 6.

8. Moule pour pneumatique (2) selon la revendication 7, dans lequel au moins les broches de moulage (14, 34, 46, 60), parmi surface de la cavité et les broches de moulage (14, 34, 46, 60), sont soumises à un traitement de surface pour réduction de la friction.
